# EUROPEAN PATENT SPECIFICATION

(11) **EP 2 538 484 B1**
(45) Date of publication and mention of the grant of the patent: **13.06.2018**
(21) Application number: 12150094.6
(22) Date of filing: 03.01.2012
(51) Int. Cl.: H01M 10/0525, H01M 4/133, H01M 4/587, H01M 4/583, H01M 4/02

(54) **Negative active material for rechargeable lithium battery, method of preparing the same, and negative electrode and rechargeable lithium battery including the same**
Negativ-Aktivmaterial für eine wiederaufladbare Lithiumbatterie, Herstellungsverfahren dafür und negative Elektrode sowie wiederaufladbare Lithiumbatterie damit
Matériau actif négatif pour batterie au lithium rechargeable, procédé de préparation de celui-ci, et électrode négative et batterie au lithium rechargeable comprenant celui-ci

(30) Priority: 20.06.2011 US 201161499086 P; 16.12.2011 US 201113328939
(43) Date of publication of application: 26.12.2012
(73) Proprietor: Samsung SDI Co., Ltd., Yongin-si, Gyeonggi-do (KR)
(72) Inventor: Kim, Hee-Joong, Gyeonggi-do (KR); Ishida, Sumihito, Gyeonggi-do (KR); Song, Eui-Hwan, Gyeonggi-do (KR)
(74) Representative: Russell, Tim

(56) References cited:
- EP-A2- 1 178 549
- WO-A1-2005/011030
- KR-B1- 100 250 859
- US-A- 6 066 413
- AZUMA H ET AL: "Advanced carbon anode materials for lithium ion cells", JOURNAL OF POWER SOURCES, ELSEVIER SA, CH, vol. 81-82, 1 September 1999 (1999-09-01), pages 1-7, XP004363115, ISSN: 0378-7753, DOI: 10.1016/S0378-7753(99)00122-6

## Description

The present invention relates to a negative active material for a rechargeable lithium battery, and a negative electrode and a rechargeable lithium battery, including the same and the use of a carbon-based material as a negative electrode active material for a rechargeable lithium battery. Lithium rechargeable batteries have recently drawn attention as a power source for small portable electronic devices. They use an organic electrolyte solution and thereby have twice the discharge voltage of a conventional battery using an alkali aqueous solution, and accordingly have high energy density.

Such rechargeable lithium batteries are formed by injecting an electrolyte into a battery cell including a positive electrode including a positive active material that can intercalate and deintercalate lithium and a negative electrode including a negative active material that can intercalate and deintercalate lithium.

Research on a next generation of battery having both the advantages of a rechargeable lithium battery and the advantages of a super capacitor, that is, a battery having high energy density, excellent cycle-life and stability characteristics, and the like is in its early stages. The present invention is a negative active material according to claim 1, a negative electrode for a rechargeable lithium battery comprising the negative active material of claim 1, a method of preparing the negative active material of claim 1 and the use of a carbon-based material according to claim 8. The negative active material according to the invention has high-capacity, and excellent high rate capabilities and cycle-life at a high rate.

The carbon-based material is a low-crystalline soft carbon.

Soft carbon is a carbon material that is susceptible to a layered-structure by a heat treatment due to the aggregation of graphite particles in an orderly manner.

The carbon-based material may have an R_{AB} value of from about 2.0 to about 4.0, wherein (R_{AB}) is the ratio of the height of a peak (B) to the height of the background (A) in an XRD pattern.

The carbon-based material may have a FWHM ranging from 3.5° to 5.5° at 2θ ranging from 20° to 30° in an XRD pattern using CuKα ray.

The carbon-based material may have a peak area ratio ranging from 1.0 to 50.0 of a peak at 2θ ranging from 50° to 53°relative to a peak at 2θ ranging from 20° to 30°in an XRD pattern using CuKα ray.

The carbon-based material may have a peak area ratio ranging from 1.0 to 100.0 of a peak at 2θ ranging from 42° to 45° relative to a peak at 2θ ranging from 20° to 30° in an XRD pattern using CuKα ray.

The carbon-based material may have a peak area ratio ranging from 0.1 to 50.0 of a peak at 2θ ranging from 50° to 53°relative to a peak at 2θ ranging from 42° to 45°in an XRD pattern using CuKα ray.

The carbon-based material has an average particle diameter (D50) ranging from 5 µm to 20 µm. In the carbon-based material, the carbon may have interplanar spacing d(002) ranging from 3.370 to 3.434 Å.

The carbon-based material has a lattice constant L_{c} ranging from 10 to 35 Å.

The carbon-based material may have a lattice constant of Lₐ ranging from 1000 to 3000 Å.

The carbon-based material may have a specific surface area ranging from 2.5 to 20 m²/g.

The carbon-based material may have tap density ranging from 0.30 to 1.00 g/cm³.

The carbon-based material may have a true density ranging from 1.00 to 3.00 g/cm³. According to a second aspect of the invention, a negative electrode for a rechargeable lithium battery including the negative active material of the invention is provided.

The negative electrode may have an active mass level ranging from 2.0 to 10.0 mg/cm².

The negative electrode may have a thickness ranging from 45 to 100 µm.

The negative electrode may have electrical conductivity ranging from 1.00 to 4.00 s/m.

The negative electrode may have binding properties ranging from 0.50 to 6.00 gf/mm.

According to a third aspect of the present invention, a rechargeable lithium battery that includes the negative electrode according to the invention in its second aspect; a positive electrode; and an electrolyte is provided.

The rechargeable lithium battery may have reversible capacity ranging from 250 to 400 mAh/g.

According to a fourth aspect not forming part of the present invention provided is a method of manufacturing the negative active which includes firing a carbon-based material precursor at a temperature ranging from 900 to 1500°C.

The carbon-based material precursor may include soft carbon.

According to a fifth aspect of the present invention, provided is the use of a carbon-based material according to claim 8. The present invention may provide a rechargeable lithium battery having high-capacity and excellent high rate capabilities and cycle-life at a high rate and, in particular, a lithium ion battery for a hybrid vehicle having high input and output.

A more complete appreciation of the present invention, and many of the attendant advantages thereof, will be readily apparent as the same becomes better understood by reference to the following detailed description when considered in conjunction with the accompanying drawings, wherein:
Figure 1 is a schematic view of a rechargeable lithium battery according to an embodiment.
Figures 2A and 2b schematically show an SEM (scanning electron microscope) photograph of the negative active materials according to Example 1 and Comparative Example 2, respectively
Figure 3 provides a graph showing the XRD (X-ray diffraction) pattern of the negative active materials according to Example 1 and Comparative Examples 1 and 2.
Figure 4 provides the EDS (Energy Dispersive Spectrometry) analysis graph of the negative active material according to Example 1.
Figure 5 provides a graph showing cycle-life characteristics of the rechargeable lithium batteries of Example 1 and Comparative Example 2 at a high rate.
One aspect of the present invention is a negative active material for a rechargeable lithium battery according to claim 1. In an embodiment, the FWHM may be from 3.5° to 5.5°. In addition, the carbon-based material has a peak area ratio ranging from 1.0 to 100.0 of a peak at 2θ ranging from 50° to 53° relative to a peak at 2θ ranging from 20° to 30°. In an embodiment, the peak area ratio may be from 1.0 to 50.0. A carbon-based material with FWHM and peak area ratios within the above ranges exhibits low crystallinity. When the low crystalline carbon-based material is used as a negative active material, it may secure high-capacity and excellent high rate capabilities and cycle-life at a high rate by factors of a pore due to imperfect structure of a layer, a cross-section line, and a layer gap due to a molecular bridging reaction among molecule clusters.

The FWHM (full width at half maximum) indicates a full width at 50% between the lowest and highest points of the intensity of a peak. The area of the peak may be calculated through integration.

The area of the peak may be calculated through integration. Some embodiments relate to the ratio (R_{AB}) of the height of a peak (B) to the height of the background (A) in an XRD pattern. In some embodiments, the carbon-based material has an R_{AB} value of from 2.0 to 4.0.

In addition, the carbon-based material has a peak area ratio ranging from 1.0 to 100.0 of a peak at 2θ ranging from 42° to 45°relative to a peak at 2θ ranging from 20° to 30°in an XRD pattern using CuKα ray. Furthermore, the carbon-based material has a peak area ratio ranging from 0.1 to 50.0 of a peak at 2θ ranging from 50° to 53°relative to a peak at 2θ ranging from 42° to 45° in an XRD pattern using CuKα ray. In an embodiment, the peak area ratio may be from 0.1 to 20.0. A carbon-based material having a peak area ratio within the above range has low crystallinity. When the low crystalline carbon-based material is used as a negative active material, a rechargeable lithium battery may have high rate capabilities and excellent cycle-life characteristics at a high rate.

The carbon-based material is in particular, low crystalline soft carbon with a FWHM and a peak area ratio within the above ranges. The carbon-based material consists of the low-crystalline soft carbon.

The carbon-based material has an average particle diameter (D50) ranging from 5 to 20 µm. In an embodiment, the carbon-based material may have an average particle diameter of from 5 to 15 µm. When the carbon-based material with an average particle diameter (D50) within this range is used as a negative active material, the low crystalline carbon-based material accomplishes excellent high rate capabilities and cycle-life characteristic of a battery at a high rate. The negative electrode active material consists of a low-crystalline carbon-based material having an average particle diameter ranging from 5 to 20 µm.

In the carbon-based material, the carbon has an interplanar spacing d(002) ranging from 3.00 to 5.00 Å. In an embodiment, the carbon-based material may have an interplanar spacing d(002) ranging from 3.370 to 3.434 Å. Furthermore, the carbon-based material may have a lattice constant of Lₐ ranging from 1000 to 3000 Å. The carbon-based material has a lattice constant L_{c} ranging from 10 to 35 Å. Specifically, the carbon-based material may have a lattice constant Lₐ ranging from 1000 to 2000 Å and a lattice constant L_{c} ranging from 20 to 35 Å. This is however not claimed. When a carbon-based material with an interplanar spacing d(002) and a lattice constant within these ranges is used as a negative active material, the carbon-based material may be low crystalline and accomplish excellent high rate capabilities and cycle-life characteristics at a high rate.

The carbon-based material may have a specific surface area ranging from 1 to 20 m²/g and in particular, from 2.5 to 20 m²/g. When a carbon-based material with a specific surface area within this range is used as a negative active material, the carbon-based material may be low crystalline and may bring about excellent high rate capabilities and cycle-life characteristic at a high rate.

The carbon-based material may have tap density ranging from 0.30 to 1.50 g/cm³ and in particular, from 0.30 to 1.00 g/cm³. The carbon-based material may have true density ranging from 1.00 to 3.00 g/cm³ and, in particular, from 1.50 to 2.50 g/cm³. When a carbon-based material has a tap density and a true density within these ranges, the carbon-based material may be low crystalline and accomplish excellent high rate capabilities cycle-life characteristic at a high rate.

The low crystalline carbon-based material may be prepared by firing a carbon-based material precursor at a temperature ranging from 700 to 1500°C, in particular, from 900 to 1500°C, and in particular, from 900 to 1200°C. This method is however not forming part of the present invention. The carbon-based material precursor may be soft carbon.

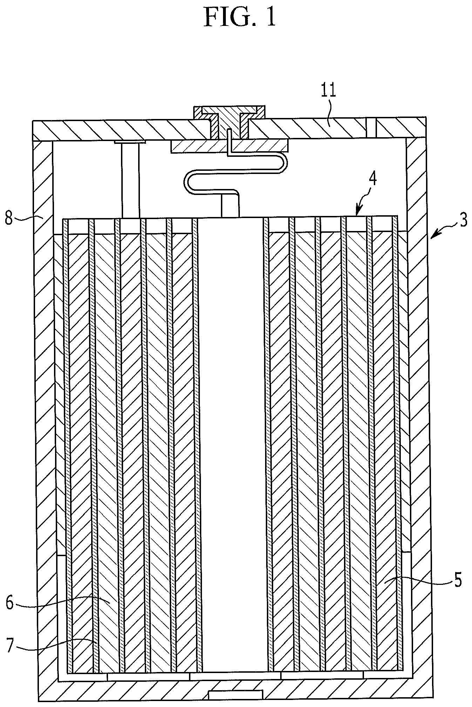

Hereinafter, a rechargeable lithium battery including the negative active material is described with reference to Figure 1.

Figure 1 is a schematic view of a rechargeable lithium battery according to an embodiment of the present invention.

Referring to Figure 1, a rechargeable lithium battery 3 according to an embodiment is a prismatic battery that includes an electrode assembly 4 including a positive electrode 5, a negative electrode 6, and a separator 7 interposed between the positive electrode and negative electrode 6 in a battery case 8, and electrolyte injected through an upper portion of the battery case 8, and a cap plate 11 sealing the case. However, the rechargeable lithium battery according to the present invention is not limited to a prismatic battery, but may have any shape such as a cylinder, a coin, a pouch, and the like.

The negative electrode includes a negative current collector and a negative active material layer disposed on the negative current collector.

The negative current collector may be a copper foil.

The negative active material layer may include a negative active material, a binder, and optionally a conductive material.

The negative active material may be the low crystalline carbon-based material described above.

The binder improves binding properties of the positive active material particles to each other and to a current collector. Examples of the binder include at least one selected from the group consisting of polyvinyl alcohol, carboxymethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material such as a metal powder or a metal fiber including copper, nickel, aluminium, silver, and the like; a conductive polymer such as a polyphenylene derivative; and a mixture thereof.

The negative electrode may be fabricated by a method including mixing the negative active material, the conductive material, and the binder in a solvent to provide a negative active material layer composition, and coating the negative active material layer composition on the current collector. The solvent may be N-methylpyrrolidone, but it is not limited thereto.

A negative electrode including a low crystalline carbon-based material as a negative active material may have an active mass level ranging from 2.0 to 10.0 mg/cm² and specifically, from 2.0 to 8.0 mg/cm². In addition, the negative electrode may have a thickness ranging from 45 to 100 µm and specifically, from 45 to 80 µm. Furthermore, the negative electrode may have electrical conductivity ranging from 1.00 to 4.00 s/m and specifically, from 1.50 to 3.50 s/m. In addition, the negative electrode may have binding properties ranging from 0.50 to 6.00 gf/mm and specifically, from 2.00 to 6.00 gf/mm. A negative electrode with an active mass level, a thickness, electrical conductivity, and binding property within these ranges may realize a rechargeable lithium battery with excellent high rate capabilities and cycle-life characteristics at a high rate.

The positive electrode includes a current collector and a positive active material layer disposed on the current collector. The positive active material layer includes a positive active material, a binder, and optionally a conductive material.

The current collector may be aluminium (Al), but is not limited thereto.

The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used:
LiₐA_{1-b}B_{b}D₂ (wherein, in the above formula, 0.90 ≤ a ≤ 1.8, and 0 ≤ b ≤ 0.5); LiₐE_{1-b}B_{b}O_{2-c}D_{c} (wherein, in the above formula, 0.90 ≤ a ≤ 1.8, 0 ≤ b ≤ 0.5, and 0 ≤ c ≤ 0.05); LiE_{2-b}B_{b}O_{4-c}D_{c} (wherein, in the above formula, 0 ≤ by 0.5, 0 ≤ c ≤ 0.05); LiₐNi_{1-b-c}CO_{b}B_{c}D_{α}(wherein, in the above formula, 0.90 ≤ a ≤ 1.8, 0 ≤ b ≤ 0.5, 0 ≤ c ≤ 0.05, and 0 < α ≤ 2); LiₐNi_{1-b-c}Co_{b}B_{c}O_{2-α}X_{α}(wherein, in the above formula, 0.90 ≤ a ≤ 1.8, 0 ≤ b ≤ 0.5, 0 ≤ c ≤ 0.05, and 0 < α < 2); LiₐNi_{1-b-c}Co_{b}B_{c}O_{2-α}X₂ (wherein, in the above formula, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}D_{α}(wherein, in the above formula, 0.90 ≤ a ≤ 1.8, 0 ≤ b ≤ 0.5, 0 ≤ c ≤ 0.05, and 0 < α ≤ 2); LiₐNi_{1-b-c}Mn_{b}B_{c}O_{2-α}X_{α}(wherein, in the above formula, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}O_{2-α}X₂(wherein, in the above formula, 0.90 ≤ a ≤ 1.8, 0 ≤ b ≤ 0.5, 0 ≤ c ≤ 0.05, and 0 < α < 2); LiₐNi_{b}E_{c}G_{d}O₂(wherein, in the above formula, 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GₑO₂(wherein, in the above formula, 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiₐNiG_{b}O₂ (wherein, in the above formula, 0.90 ≤ a ≤ 1.8, and 0.001 ≤ b ≤ 0.1); LiₐCoG_{b}O₂ (wherein, in the above formula, 0.90 ≤ a ≤ 1.8, and 0.001 ≤ b ≤ 0.1); LiₐMnG_{b}O₂(wherein, in the above formula, 0.90 ≤ a ≤ 1.8, and 0.001 ≤ b ≤ 0.1); LiₐMn₂G_{b}O₄(wherein, in the above formula, 0.90 ≤ a ≤ 1.8, and 0.001 ≤ b ≤ 0.1); QO₂; QS₂; LiQS₂; V₂O₅; LiV₂O₅; LiRO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; X is F, S, P, or a combination thereof,; G is Al, Cr, Mn, Fe, Mg, La, Ce, Sr, V, or a combination thereof; Q is Ti, Mo, Mn, or a combination thereof; R is Cr, V, Fe, Sc, Y, or a combination thereof; J is V, Cr, Mn, Co, Ni, Cu, or a combination thereof.

The lithiated intercalation compound may have a coating layer on the surface, or can be mixed with a compound having a coating layer. The coating layer may include at least one coating element compound selected from the group consisting of an oxide of a coating element, a hydroxide, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like, but is not illustrated in more detail, since it is well-known to those who work in the related field.

The binder improves binding properties of the positive active material particles to each other and to a current collector. Examples of the binder include at least one selected from the group consisting of polyvinyl alcohol, carboxymethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may be used as a conductive material unless it causes a chemical change. Examples of the conductive material include natural graphite, artificial graphite, carbon black, acetylene black, ketjen black, a carbon fiber, a metal powder or a metal fiber including copper, nickel, aluminium, silver, and so on, and a polyphenylene derivative.

The positive electrode may be fabricated by a method including mixing the active material, a conductive material, and a binder to provide an active material composition, and coating the composition on a current collector.

The electrode manufacturing method is well known, and thus is not described in detail in the present specification. The solvent may be N-methylpyrrolidone, but it is not limited thereto.

The electrolyte includes a non-aqueous organic solvent and a lithium salt.

The non-aqueous organic solvent serves as a medium for transmitting ions taking part in the electrochemical reaction of a battery. The non-aqueous organic solvent may include a carbonate-based, ester-based, ether-based, ketone-based, alcohol-based, or aprotic solvent.

Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

When the linear carbonate compounds and cyclic carbonate compounds are mixed, an organic solvent having high dielectric constant and low viscosity can be provided. The cyclic carbonate and the linear carbonate can be mixed together at a volume ratio ranging from about 1:1 to about 1:9.

Examples of the ester-based solvent may include n-methylacetate, n-ethylacetate, n-propylacetate, dimethylacetate, methylpropinonate, ethylpropinonate, γ-butyrolactone, decanolide, valerolactone, mevalonolactone, caprolactone, or the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone, or the like. Examples of the alcohol-based solvent include ethyl alcohol, isopropyl alcohol, or the like.

The non-aqueous organic solvent may be used singularly or in a mixture. When the organic solvent is used in a mixture, the mixture ratio can be controlled in accordance with a desirable battery performance.

The non-aqueous electrolyte may further include overcharge inhibitor additives such as ethylene carbonate, pyrocarbonate, or the like.

The lithium salt supplies lithium ions in the battery, operates a basic operation of a rechargeable lithium battery, and improves lithium ion transportation between positive and negative electrodes.

Examples of the lithium salt include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂(lithium bisoxalato borate, LiBOB), or a combination thereof.

The lithium salt may be used in a concentration ranging from about 0.1 M to about 2.0 M. When the lithium salt is included at the above concentration range, electrolyte performance and lithium ion mobility may be enhanced due to optimal ion conductivity and viscosity.

The separator may be single layer or multilayer, for example made of polyethylene, polypropylene, polyvinylidene fluoride, or combinations thereof.

The rechargeable lithium battery including the low crystalline carbon-based material as a negative active material, may have improved reversible capacity. In particular, the rechargeable lithium battery may have reversible capacity ranging from 250 to 400 mAh/g and, specifically, from 250 to 350 mAh/g. The reversible capacity is measured under a condition of 0.2C.

Hereinafter, embodiments of the invention are illustrated in more detail with reference to examples. However, the following are exemplary only.

### Preparation of Negative active material

### Example 1

Low crystalline soft carbon (GS Caltex Co.) with an average particle diameter (D50) of 9.8µm was used as a negative active material. The low crystalline soft carbon was obtained by firing soft carbon at 950°C.

### Comparative Example 1

Graphite with an average particle diameter (D50) of 10 µm was used as a negative active material.

### Comparative Example 2

Soft carbon (Hitachi Ltd.) with an average particle diameter (D50) of 10 µm was used as a negative active material.

### Evaluation 1: SEM photograph analysis of Negative active materials

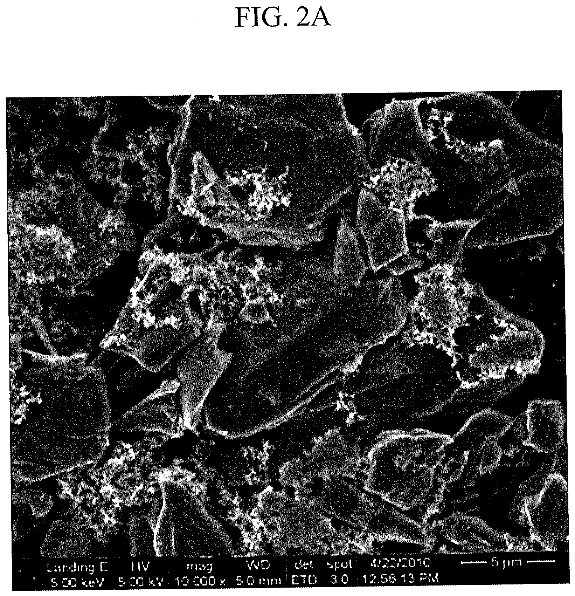

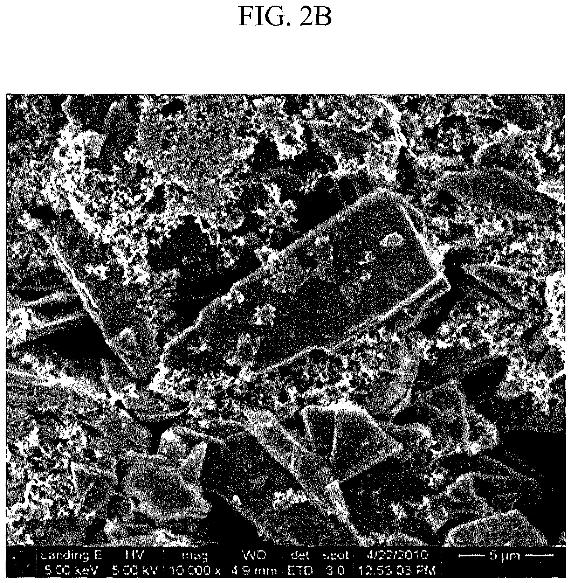

Figure 2a and 2b provide SEM (scanning electron microscope) photographs of the negative active materials according to Example 1 and Comparative Example 2, respectively. Referring to Figures 2a and 2b, the negative active material of Example 1 had lower crystallinity than the negative active material of Comparative Example 2.

### Evaluation 2: XRD pattern analysis of Negative active materials

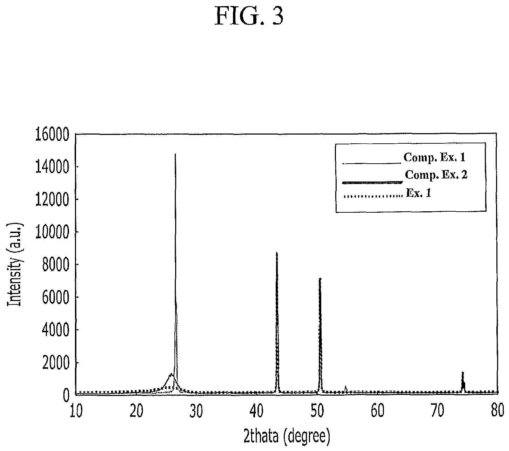

Figure 3 provides a graph showing XRD (X-ray diffraction) pattern of the negative active materials according to Example 1 and Comparative Example 1 and 2. In addition, Table 1 below shows the area of peaks in the XRD pattern shown in Figure 3.

The XRD pattern was measured with 40 Kv of tube voltage and 30mA of tube current at a step of 0.02°in a range of 10° to 90° at a speed of 0.5 sec/step by using CuKα ray.

**[Table 1]**

| 2θ(degree) | Example 1 | Comparative Example 1 | Comparative Example 2 |
|---|---|---|---|
| 20° to 30° | 1,069,762 | 12,505 | 5,596,428 |
| 42° to 45° | 3,594,512 | 2,928,339 | 3,463,052 |
| 50° to 53° | 4,064,299 | 3,320,066 | 3,964,013 |

Referring to Figure 3, Example 1 including a low-crystalline carbon-based material according to an embodiment of the present invention had a FWHM of about 4.18° at 2θ in a range of 20° to 30°, while Comparative Example 1 had a FWHM of about 0.34°, and Comparative Example 2 had a FWHM of about 1.82°.

In addition, referring to Figure 3 and Table 1, Example 1 had a peak area ratio of about 3.8, of a peak at 2θ in a range of 50° to 53° relative to a peak at 2θ in a range of 20° to 30°. For Comparative Example 1, the corresponding peak area ratio was about 265.5, and for Comparative Example 2, the peak area ratio was about 0.71.

Accordingly, the carbon-based material used in Example 1 was low-crystalline.

### Evaluation 3: EDS (Energy Dispersive Spectrometry) analysis of Negative active materials

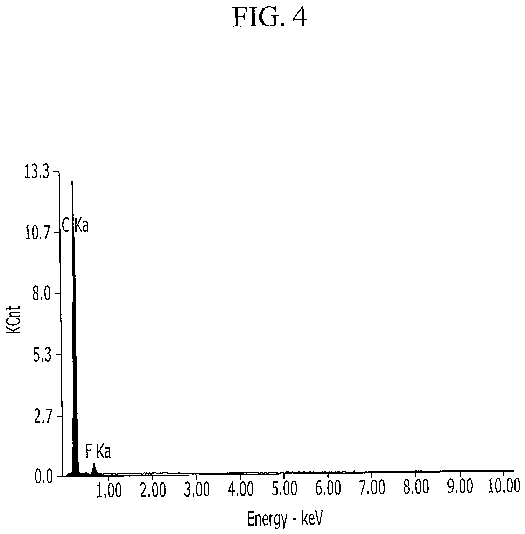

Figure 4 provides the EDS (Energy Dispersive Spectrometry) analysis graph of the negative active material according to Example 1. Referring to Figure 4, the negative active material of Example 1 included no other material other than carbon.

### Evaluation 4: Crystal structure analysis of Negative active materials

The negative active materials according to Example 1 and Comparative Examples 1 and 2 were analyzed regarding crystal structure in the following method. The results are provided in the following Table 2.

In the XRD pattern, a basal spacing (d), a distance from 2θ of the peaks to a lattice, was obtained in a Bragg's law. Accordingly, all the peaks in the XRD pattern were analyzed regarding location to identify distribution on the lattice in the crystal structure.

**[Table 2]**

| | Example 1 | Comparative Example 1 | Comparative Example 2 |
|---|---|---|---|
| Interplanar spacing d(002) of carbon (Å) | 3.43 | 3.34 | 3.44 |
| Lattice constant Lₐ (Å) | 1809 | 1783 | 1904 |
| Lattice constant L_{c} (Å) | 26 | 616 | 48 |

Referring to Table 2, a carbon-based material used as a negative active material according to an embodiment of the present invention was identified to be low-crystalline.

### Evaluation 5: Specific surface area analysis of Negative active materials

The negative active materials according to Example 1 and Comparative Examples 1 and 2 were measured regarding specific surface area by using a dispersion analyzer (LUMiSizer®). The negative active material of Example 1 had a specific surface area of 3 m²/g, that of Comparative Example 1 had a specific surface area of 2 m²/g, and that of Comparative Example 2 had a specific surface area of 2 m²/g.

### Evaluation 6: Tap density and True density analysis of Negative active materials

The negative active materials according to Example 1 and Comparative Examples 1 and 2 were analyzed regarding tap density by using tap density analyzer (TDA-2). The negative active material of Example 1 was found to have a tap density of 0.939 g/cm³, Comparative Example 1 had a tap density of 1.08 g/cm³, and Comparative Example 2 had a tap density of 1.09 g/cm³.

In addition, the negative active materials according to Example 1 and Comparative Examples 1 and 2 were measured regarding true density by using a sequential auto powder true density meter. The negative active material of Example 1 had a true density of 1.941 g/cm³, Comparative Example 1 of 3.05 g/cm³, and Comparative Example 2 of 3.08 g/cm³.

Accordingly, a negative active material according to an embodiment of the present invention was identified to be a low-crystalline carbon-based material.

### Fabrication of Rechargeable lithium battery cell

85 wt% of the negative active materials of Example 1 and Comparatives Example 1 and 2, respectively, were respectively mixed with 10 wt% of polyvinylidene fluoride (PVDF) and 5 wt% of acetylene black. The mixture was dispersed into N-methyl-2-pyrrolidone, preparing a negative active material layer composition. Next, the negative active material layer composition was coated on a copper foil and then dried and compressed, fabricating a negative electrode. Herein, the negative electrode of Example 1 had a thickness of 60 µm, the negative electrode of Comparative Example 1 had a thickness of 53 µm, and the negative electrode of Comparative Example 2 had a thickness of 65 µm.

85 wt% of LiCoO₂ with an average particle diameter of 5 µm was mixed with 6 wt% of polyvinylidene fluoride (PVDF), 4 wt% of acetylene black, and 5 wt% of activated carbon. The mixture was dispersed into N-methyl-2-pyrrolidone, preparing a positive active material layer composition. The positive active material layer composition was coated on a 20 µm-thick aluminium foil and then dried and compressed, fabricating a positive electrode.

The positive and negative electrodes and a 25µm-thick polyethylene material separator were wound and compressed, fabricating a 50mAh pouch-type rechargeable lithium battery cell.

Herein, an electrolyte solution was prepared by mixing ethylenecarbonate (EC), ethylmethylcarbonate (EMC) and dimethylcarbonate (DMC) in a volume ratio of 3:3:4 and dissolving LiPF₆ in the mixed solution to a concentration of 1.15M.

### Evaluation 7: Active mass level evaluation of Negative electrode

Each negative electrode fabricated using the negative active materials according to Example 1 and Comparative Examples 1 and 2, respectively, were measured regarding weight per area with an electric scale to analyze active mass level. The results showed that the negative electrode of Example 1 had an active mass level of 5.05 mg/cm², while the negative electrode of Comparative Example 1 had an active mass level of 5.12 mg/cm² and the negative electrode of Comparative Example 2 had an active mass level of 5.52 mg/cm².

### Evaluation 8: Electrical conductivity evaluation of Negative electrode

Each negative electrode fabricated by using the negative active materials according to Example 1 and Comparative Examples 1 and 2, respectively, were analyzed regarding electrical conductivity. The negative electrode of Example 1 had an electrical conductivity of 2.504 s/m, the negative electrode of Comparative Example 1 had an electrical conductivity of 0.683 s/m, and the negative electrode of Comparative Example 2 had an electrical conductivity of 2.093 s/m.

Accordingly, a negative electrode according to an embodiment of the present invention included a low-crystalline carbon-based material and thus, had high electrical conductivity, accomplishing excellent cycle-life at a high rate.

### Evaluation 9: Binding property evaluation of Negative electrodes

The negative electrodes fabricated by using the negative active materials according to Example 1 and Comparative Examples 1 and 2, respectively, were analyzed regarding binding properties. The results showed that the negative electrode of Example 1 had binding of 4.05 gf/mm, the negative electrode of Comparative Example 1 of 3.24 gf/mm, and the negative electrode Comparative Example 2 of 3.24 gf/mm.

Accordingly, a negative electrode according to an embodiment of the present invention included a low-crystalline carbon-based material and had high binding property, accomplishing excellent cycle-life at a high rate.

### Evaluation 10: Irreversible capacity evaluation of Rechargeable lithium battery cells

The rechargeable lithium battery cells fabricated using the negative active material of Example 1 and Comparative Examples 1 and 2, respectively, were charged and discharged under the following conditions described in the Table 3. Table 4 shows the capacity of the rechargeable lithium battery cells.

**[Table 3]**

| | | C rate (C) | cut-off voltage(V) | Mode | Open time (min) |
|---|---|---|---|---|---|
| 1 cycle | charge | 0.05 | 3.0 | CC | 20 |
| 2 cycle | charge | 0.2 | 4.0 | CC | 20 |
| | discharge | 0.2 | 2.0 | CC | 20 |
| 3 cycle | charge | 0.2 | 4.1 | CC | 20 |
| | discharge | 0.2 | 2.0 | CC | 20 |
| 4 cycle | charge | 0.2 | 4.2 | CC | 20 |
| | discharge | 0.2 | 2.0 | CC | 20 |
| 5 cycle | charge | 0.2 | 4.2 (0.05C) | CCCV | 20 |
| | discharge | 0.2 | 2.0 | CC | 20 |
| 6 to 10 cycles | charge | 1.0 | 4.2 (0.05C) | CCCV | 20 |
| | discharge | 1.0 | 2.0 | CC | 20 |

**[Table 4]**

| | Example 1 | Comparative Example 1 | Comparative Example 2 |
|---|---|---|---|
| Irreversible capacity of 10 cycle(mAh/g) | 18.50 | 3.11 | 18.84 |
| discharge capacity of 5 cycle (mAh/g) | 68.27 | 58.67 | 49.28 |
| Irreversible capacity retention (%)* | 21.32 | 5.03 | 27.65 |

| | | | |
|---|---|---|---|
| * Irreversible capacity retention (%) = Irreversible capacity of 10 cycle / (Irreversible capacity of 10 cycle + discharge capacity of 5 cycle) * 100 | | | |

Referring to Table 4, Example 1, including a low crystalline carbon-based material as a negative active material according to an embodiment of the present invention, has a better effect in terms of irreversible capacity, compared to Comparative Example 2.

### Evaluation 11: Cycle-life at a high rate evaluation of rechargeable lithium battery cell

The rechargeable lithium battery cells including the negative active materials according to Example 1 and Comparative Examples 1 and 2, respectively, were charged and discharged under the following conditions and evaluated regarding cycle-life at a high rate. The results are provided in the following Table 5.

The rechargeable lithium battery cells were charged up to 4.2V under CC mode and charged up to 0.05C under CV mode and discharged down to 2.0V under CC mode and then, cut-off.

The following charge capacity retention (%) and discharge capacity retention (%) values are a percentage of capacity at 50 C relative to capacity at 1 C.

**[Table 5]**

| | | Example 1 | Comparative Example 1 | Comparative Example 2 |
|---|---|---|---|---|
| charge capacity (mAh/g) | 1C | 213 | 264 | 189 |
| | 50C | 129 | 31 | 104 |
| charge capacity retention (50C/1C) (%) | | 61 | 11.7 | 55 |
| Discharge capacity (mAh/g) | 1C | 217 | 270 | 192 |
| | 50C | 173 | 212 | 160 |
| Discharge capacity retention (50C/1C) (%) | | 83 | 78.5 | 79.7 |

Referring to Table 5, Example 1, including a low-crystalline carbon-based material as a negative active material according to an embodiment of the present invention had excellent high rate charge characteristics compared with Comparative Examples 1 and 2.

### Evaluation 12: Cycle-life at a high rate evaluation of Rechargeable lithium battery cell

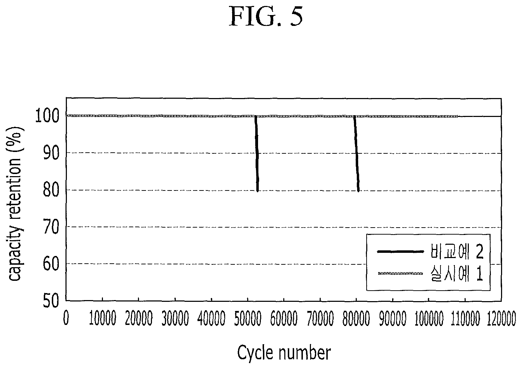

The rechargeable lithium battery cells including the negative active material according to Example 1 and Comparative Examples 1 and 2, respectively, were charged and discharged under the following conditions and measured regarding cycle-life at a high rate. The results are provided in Figure 5.

30 C charge mode: charged for 30 sec at 30 C of a charge current
30 C discharge mode: discharged for 30 sec at 30 C of a discharge current
Figure 5 provides a graph showing cycle-life of the rechargeable lithium battery cells comprising the negative active materials of Example 1 and Comparative Example 2, respectively, at a high rate.

Referring to Figure 5, the rechargeable lithium battery cell of Example 1 had no cycle-life degradation after 120,000 cycles, while the rechargeable lithium battery cell of Comparative Example 2 had cycle-life degradation after 50,000 cycles.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery comprising a carbon-based material consisting of low-crystalline soft carbon having, in an X-ray diffraction pattern measured using a CuKα ray:
- a full width at half maximum (FWHM) of from 2.5° to 6.0° at 2θ ranging from 20° to 30°;
- a peak area ratio of a peak at 2θ ranging from 50° to 53° relative to a peak at 2θ ranging from 20° to 30° of from 1 to 100;
- an interplanar spacing d(002) ranging from 3.370 × 10⁻¹⁰ to 3.434 × 10⁻¹⁰ m (3.370 to 3.434 Å);
- a lattice constant L_{c} ranging from 10 × 10⁻¹⁰ to 35 × 10⁻¹⁰ m (10 to 35 Å);
- a peak area ratio of a peak at 2θ ranging from 42° to 45°relative to a peak at 2θ ranging from 20° to 30° of from 1.0 to 100.0;
- a peak area ratio of a peak at 2θ ranging from 50° to 53°relative to a peak at 2θ ranging from 42° to 45° of from 0.1 to 50.0; and
- an R_{AB} value of from about 2.0 to about 4.0, wherein (R_{AB}) is the ratio of the height of a peak (B) to the height of the background (A) in the X-ray diffraction pattern,
wherein the carbon-based material has an average particle diameter (D50) ranging from 5 µm to 20 µm.

2. A negative active material as claimed in claim 1, wherein the carbon-based material has a FWHM of from 3.5° to 5.5° at 2θ ranging from 20° to 30°.

3. A negative active material as claimed in any preceding claim, wherein the carbon-based material has a specific surface area of from 2.5 to 20 m²/g.

4. A negative active material as claimed in any preceding claim, wherein the carbon-based material has a true density ranging from 1.00 to 3.00 g/cm³.

5. A negative active material as claimed in any preceding claim, wherein the carbon-based material has a tap density ranging from 0.30 to 1.00 g/cm³.

6. A negative electrode for a rechargeable lithium battery comprising the negative active material of any of claims 1 to 5.

7. A rechargeable lithium battery comprising:
a negative electrode according to claim 6;
a positive electrode; and
an electrolyte.

8. Use of a carbon-based material consisting of low-crystalline soft carbon having, in an X-ray diffraction pattern measured using a CuKα ray:
- a full width at half maximum (FWHM) of from 2.5° to 6.0° at 2θ ranging from 20° to 30°;
- a peak area ratio of a peak at 2θ ranging from 50° to 53° relative to a peak at 2θ ranging from 20° to 30° of from 1 to 100;
- an interplanar spacing d(002) ranging from 3.370 × 10⁻¹⁰ to 3.434 × 10⁻¹⁰ m (3.370 to 3.434 Å);
- a lattice constant L_{c} ranging from 10 × 10⁻¹⁰ to 35 × 10⁻¹⁰ m (10 to 35 Å);
- a peak area ratio of a peak at 2θ ranging from 42° to 45°relative to a peak at 2θ ranging from 20° to 30° of from 1.0 to 100.0;
- a peak area ratio of a peak at 2θ ranging from 50° to 53°relative to a peak at 2θ ranging from 42° to 45° of from 0.1 to 50.0; and
- an R_{AB} value of from about 2.0 to about 4.0, wherein (R_{AB}) is the ratio of the height of a peak (B) to the height of the background (A) in the X-ray diffraction pattern,
as a negative electrode active material for a rechargeable lithium battery,
wherein the carbon-based material has an average particle diameter (D50) ranging from 5 µm to 20 µm.

## Patentansprüche

1. Negativ-Aktivmaterial für eine wiederaufladbare Lithiumbatterie, umfassend ein Material auf Kohlenstoffbasis, bestehend aus einem niedrigkristallinen Weichkohlenstoff und aufweisend, in einem unter Verwendung eines CuKα-Strahls gemessenen Röntgenbeugungsdiagramm:
- eine Halbwertsbreite von 2,5° bis 6,0° bei einem von 20° bis 30° reichenden 2θ;
- ein Peakflächenverhältnis von einem Peak bei einem von 50° bis 53° reichenden 2θ im Verhältnis zu einem Peak bei einem von 20° bis 30° reichenden 2θ von 1 bis 100;
- einen von 3,370 · 10⁻¹⁰ bis 3,434 · 10⁻¹⁰ m (3,370 bis 3,434 Å) reichenden interplanaren Abstand d(002);
- eine von 10 · 10⁻¹⁰ bis 35 · 10⁻¹⁰ m (10 bis 35 Å) reichende Gitterkonstante L_{c};
- ein Peakflächenverhältnis von einem Peak bei einem von 42° bis 45° reichenden 2θ im Verhältnis zu einem Peak bei einem von 20° bis 30° reichenden 2θ von 1,0 bis 100,0;
- ein Peakflächenverhältnis von einem Peak bei einem von 50° bis 53° reichenden 2θ im Verhältnis zu einem Peak bei einem von 42° bis 45° reichenden 2θ von 0,1 bis 50,0; und
- einen R_{AB}-Wert von etwa 2,0 bis etwa 4,0, wobei (R_{AB}) das Verhältnis der Höhe eines Peaks (B) zur Höhe des Untergrunds (A) in dem Röntgenbeugungsdiagramm ist,
wobei das Material auf Kohlenstoffbasis einen von 5 µm bis 20 µm reichenden mittleren Teilchendurchmesser (D50) aufweist.

2. Negativ-Aktivmaterial nach Anspruch 1, wobei das Material auf Kohlenstoffbasis eine FWHM von 3,5° bis 5,5° bei einem von 20° bis 30° reichenden 2θ aufweist.

3. Negativ-Aktivmaterial nach einem vorangehenden Anspruch, wobei das Material auf Kohlenstoffbasis eine spezifische Oberfläche von 2,5 bis 20 m²/g aufweist.

4. Negativ-Aktivmaterial nach einem vorangehenden Anspruch, wobei das Material auf Kohlenstoffbasis eine von 1,00 bis 3,00 g/cm³ reichende wahre Dichte aufweist.

5. Negativ-Aktivmaterial nach einem vorangehenden Anspruch, wobei das Material auf Kohlenstoffbasis eine von 0,30 bis 1,00 g/cm³ reichende Klopfdichte aufweist.

6. Negative Elektrode für eine wiederaufladbare Lithiumbatterie, umfassend das Negativ-Aktivmaterial nach einem der Ansprüche 1 bis 5.

7. Wiederaufladbare Lithiumbatterie, umfassend:
eine negative Elektrode nach Anspruch 6;
eine positive Elektrode; und
einen Elektrolyten.

8. Verwendung eines Materials auf Kohlenstoffbasis, bestehend aus einem niedrigkristallinen Weichkohlenstoff und aufweisend, in einem unter Verwendung eines CuKα-Strahls gemessenen Röntgenbeugungsdiagramm:
- eine Halbwertsbreite (*full width at half maximum -* FWHM) von 2,5° bis 6,0° bei einem von 20° bis 30° reichenden 2θ;
- ein Peakflächenverhältnis von einem Peak bei einem von 50° bis 53° reichenden 2θ im Verhältnis zu einem Peak bei einem von 20° bis 30° reichenden 2θ von 1 bis 100;
- einen von 3,370 · 10⁻¹⁰ bis 3,434 · 10⁻¹⁰ m (3,370 bis 3,434 Å) reichenden interplanaren Abstand d(002);
- eine von 10 · 10⁻¹⁰ bis 35 · 10⁻¹⁰ m (10 bis 35 Å) reichende Gitterkonstante L_{c};
- ein Peakflächenverhältnis von einem Peak bei einem von 42° bis 45° reichenden 2θ im Verhältnis zu einem Peak bei einem von 20° bis 30° reichenden 2θ von 1,0 bis 100,0;
- ein Peakflächenverhältnis von einem Peak bei einem von 50° bis 53° reichenden 2θ im Verhältnis zu einem Peak bei einem von 42° bis 45° reichenden 2θ von 0,1 bis 50,0; und
- einen R_{AB}-Wert von etwa 2,0 bis etwa 4,0, wobei (R_{AB}) das Verhältnis von der Höhe eines Peaks (B) zu der Höhe des Untergrunds (A) in dem Röntgenbeugungsdiagramm ist,
als Negativelektroden-Aktivmaterial für eine wiederaufladbare Lithiumbatterie,
wobei das Material auf Kohlenstoffbasis einen von 5 µm bis 20 µm reichenden mittleren Teilchendurchmesser (D50) aufweist.

## Revendications

1. Matériau actif négatif pour une batterie rechargeable au lithium comprenant un matériau à base de carbone constitué d'un carbone doux faiblement cristallin ayant, dans un motif de diffraction des rayons X mesuré par utilisation d'un rayon CuKα :
- une largeur totale à mi-hauteur (LTMH) de 2,5° à 6,0° dans la plage de 2θ allant de 20° à 30° ;
- un rapport de superficies de pics, entre un pic dans la plage de 2θ allant de 50° à 53° et un pic dans la plage de 2θ allant de 20° à 30°, de 1 à 100 ;
- une distance inter-réticulaire d(002) située dans la plage allant de 3, 370 x 10⁻¹⁰ à 3, 434 x 10⁻¹⁰ m (de 3, 370 à 3,434 Å) ;
- une constante de réseau L_{c} située dans la plage allant de 10 x 10⁻¹⁰ à 35 x 10⁻¹⁰ m (de 10 à 35 Å) ;
- un rapport de superficies de pics, entre un pic dans la plage de 2θ allant de 42° à 45° et un pic dans la plage de 2θ allant de 20° à 30°, de 1,00 à 100,0 ;
- un rapport de superficies de pics, entre un pic dans la plage de 2θ allant de 50° à 53° et un pic dans la plage de 2θ allant de 42° à 45°, de 0,1 à 50,0 ; et
- une valeur R_{AB} d'environ 2,0 à environ 4,0, où (R_{AB}) est le rapport de la hauteur d'un pic (B) à la hauteur de l'arrière-plan (A) dans le motif de diffraction des rayons X,
dans lequel le matériau à base de carbone a une granulométrie moyenne (D50) située dans la plage allant de 5 µm à 20 µm.

2. Matériau actif négatif selon la revendication 1, dans lequel le matériau à base de carbone a une LTMH de 3,5° à 5,5° dans la plage de 2θ allant de 20° à 30°.

3. Matériau actif négatif selon l'une quelconque des revendications précédentes, dans lequel le matériau à base de carbone a une surface spécifique de 2,5 à 20 m²/g.

4. Matériau actif négatif selon l'une quelconque des revendications précédentes, dans lequel le matériau à base de carbone a une masse volumique réelle située dans la plage allant de 1,00 à 3,00 g/cm³.

5. Matériau actif négatif selon l'une quelconque des revendications précédentes, dans lequel le matériau à base de carbone a une masse volumique après tassement située dans la plage allant de 0,30 à 1,00 g/cm³.

6. Electrode négative pour une batterie au lithium rechargeable comprenant le matériau actif négatif de l'une quelconque des revendications 1 à 5.

7. Batterie au lithium rechargeable comprenant :
une électrode négative selon la revendication 6 ;
une électrode positive ; et
un électrolyte.

8. Utilisation d'un matériau à base de carbone consistant en du carbone doux faiblement cristallin ayant, dans un motif de diffraction des rayons X mesuré par utilisation d'un rayon CuKα :
- une largeur totale à mi-hauteur (LTMH) de 2,5° à 6,0° dans la plage de 2θ allant de 20° à 30° ;
- un rapport de superficies de pics, entre un pic dans la plage de 2θ allant de 50° à 53° et un pic dans la plage de 2θ allant de 20° à 30°, de 1 à 100 ;
- une distance inter-réticulaire d(002) située dans la plage allant de 3, 370 x 10⁻¹⁰ à 3, 434 x 10⁻¹⁰ m (de 3, 370 à 3,434 Å) ;
- une constante de réseau Le située dans la plage allant de 10 x 10⁻¹⁰ à 35 x 10⁻¹⁰ m (de 10 à 35 Å) ;
- un rapport de superficies de pics, entre un pic dans la plage de 2θ allant de 42° à 45° et un pic dans la plage de 2θ allant de 20° à 30°, de 1,00 à 100,0 ;
- un rapport de superficies de pics, entre un pic dans la plage de 2θ allant de 50° à 53° et un pic dans la plage de 2θ allant de 42° à 45°, de 0,1 à 50,0 ; et
- une valeur R_{AB} d'environ 2,0 à environ 4,0, où (R_{AB}) est le rapport de la hauteur d'un pic (B) à la hauteur de l'arrière-plan (A) dans le motif de diffraction des rayons X,
en tant que matériau actif d'électrode négative pour une batterie au lithium rechargeable,
le matériau à base de carbone ayant une granulométrie moyenne (D50) située dans la plage allant de 5 µm à 20 µm.
